# EUROPÄISCHE PATENTSCHRIFT

(11) **EP 0 748 351 B1**
(45) Veröffentlichungstag und Bekanntmachung des Hinweises auf die Patenterteilung: **27.06.2001**
(21) Anmeldenummer: 95912202.9
(22) Anmeldetag: 04.03.1995
(51) Int. Cl.: C08K 3/00, C08L 33/12

(54) **KUNSTSTOFFORMTEILE MIT EINER MIT ANORGANISCHEN FÜLLSTOFFEN GEFÜLLTEN KUNSTSTOFFMATRIX**
MOULDED PLASTIC PARTS WITH A PLASTIC MATRIX FILLED WITH INORGANIC FILLERS
PIECES MOULEES EN MATIERE PLASTIQUE AVEC UNE MATRICE EN MATIERE PLASTIQUE REMPLIE DE CHARGES INORGANIQUES

(30) Priorität: 04.03.1994 DE 4407321
(43) Veröffentlichungstag der Anmeldung: 18.12.1996
(73) Patentinhaber: BLANCO GmbH + Co KG, D-75038 Oberderdingen (DE); Schock & Co. GmbH, 73614 Schorndorf (DE)
(72) Erfinder: HARKE, Stefan, D-74889 Sinsheim-Rohrbach (DE); GRATHWOHL, Stephanie, D-75447 Sternenfels (DE); PATERNOSTER, Rudolf, D-94269 Rinchnach (DE); WILHELM, Thomas, D-75056 Sulzfeld (DE); HOCK, Klaus, D-94209 Regen (DE); FENZL, Werner, D-94209 Regen (DE)
(74) Vertreter: Hoeger, Stellrecht & Partner
(86) Internationale Anmeldenummer: EP9500796
(87) Internationale Veröffentlichungsnummer: WO9523825

(56) Entgegenhaltungen:
- EP-A- 0 361 101
- EP-A- 0 491 170
- WO-A-93/10182

## Beschreibung

Die Erfindung betrifft Kunststofformteile mit einer mit anorganischen Füllstoffen gefüllten Kunststoffmatrix, wobei der Füllstoffgehalt 50 bis 90 Gew. %, bezogen auf die gefüllte Matrix, beträgt.

Kunststoffteile der oben erwähnten Art finden häufig Verwendung als Funktionsteile im Küchen- und Badbereich, insbesondere als Küchenspülen, Arbeitsplatten, Waschbecken, Badewannen, etc.

Bei herkömmlichen Kunststofformteilen wird versucht, die anorganischen Füllstoffe möglichst gleichmäßig, über die Schichtdicke des Kunststofformteils gesehen, zu verteilen, um homogene Materialeigenschaften des Werkstoffs zu erhalten.

Beispiele für Rezepturen für die Herstellung von Kunststoffformteilen der eingangs erwähnten Art finden sich beispielsweise in der DE 24 49 656 C2 oder dem US-Patent 38 27 933.

Qualitätsmerkmal für die Funktionsteile im Küchen- und Badbereich ist u.a. die Kratzfestigkeit der Oberflächen, die ganz wesentlich die Lebensdauer eines solchen Funktionsteiles mitbestimmt.

In der EP-A-0 361 101 wird vorgeschlagen, bei Kunststofformteilen mit einer mit anorganischen Füllstoffen gefüllten Kunststoffmatrix einen Füllstoffgehalt von 50 bis 85 Gew.% zu verwenden. Ferner wird empfohlen, an der Sichtseite eine größere Packungsdichte der Füllstoffe vorzusehen als auf der Rückseite. Die Korngröße der Füllstoffpartikel wird in einem Bereich von 0,1 bis 0,4 mm empfohlen.

Aufgabe der vorliegenden Erfindung ist, ein Kunststofformteil der eingangs beschriebenen Art so auszubilden, daß eine verbesserte Kratzfestigkeit erreicht wird.

Diese Aufgabe wird erfindungsgemäß dadurch gelöst, daß der Füllstoffgehalt von zwei Füllstofffraktionen (a) und (b) gebildet wird, wobei die Füllstofffraktion (a) eine Korngrößenverteilung aufweist, bei der 98 Gew. % der Partikel eine Korngröße ≤ 150 µm aufweisen, und im wesentlichen gleichmäßig in der Kunststoffmatrix verteilt vorliegt und wobei die Füllstofffraktion (b) aus Partikeln mit einer Partikelgröße von ca. 300 µm bis ca. 3000 µm besteht, daß der Anteil der Füllstofffraktion (b) ca. 1 bis 35 Gew. % vom Gesamtfüllstoffgehalt beträgt und daß der Anteil der Füllstofffraktion (b) in einer Oberflächenrandschicht des Formteiles mit einer Dicke von 3 mm oder weniger auf mindestens 30 Gew. %, bezogen auf die Gesamtmasse der gefüllten Matrix, angereichert ist.

Typische Füllstoffe für beide Füllstofffraktionen sind z.B. Cristobalit, Quarz, Aluminiumtrihydroxid und sonstige bereits aus gefüllten Kunststofformteilen bekannte Füllstoffe.

Auch wenn die Auswahl der Füllstoffe der Füllstofffraktionen (a) und (b) weniger kritisch ist, werden die Füllstoffe der Fraktion (a) bevorzugt aus der Gruppe
(a) Cristobalit, Quarz, Tridymit, Glas, Emailfritten, Aluminiumoxid, Aluminiumtrihydrat, Kaolin, Magnesiumsilikat, Granit, Zirkonoxid;
   und die Füllstoffe der Fraktion (b) bevorzugt aus der Gruppe
(b) Cristobalit, Quarz, Tridymit, Glas, Emailfritten, Korundkugeln, keramische Kugeln
ausgewählt.

Im wesentlichen unabhängig von der Art des Füllstoffes ergibt sich überraschenderweise eine deutlich verbesserte Kratzfestigkeit der Kunststofformteiloberflächen, wenn neben einer Füllstofffraktion mit feinem Füllstoff (a) eine zweite Füllstoff-fraktion (b) mit einem wesentlich gröberen Korn verwendet wird.

Bei der Produktion wird darauf geachtet, daß die Füllstofffraktion mit dem gröberen Korn eine Anreicherung in der Oberflächenrandschicht des Formteils erfahren kann, wodurch sich offensichtlich eine Art Armierungseffekt einstellt. Die Verbesserung der Kratzfestigkeit beruht dabei nicht darauf, daß die groben Füllstoffpartikel in der Oberflächenrandschicht bis zur äußersten Oberfläche reichen, sondern ein Absinken bis auf die Oberfläche selbst wird vorzugsweise vermieden. Unter einer sehr dünnen äußersten Schicht bildet sich dann eine "armierte Schicht" mit einem erhöhten Anteil der Füllstofffraktion (b) aus.

Ein besonders markanter Effekt wird mit Füllstoffpartikeln der Füllstofffraktion (b) erzielt, wenn diese Partikel im wesentlichen granulare, insbesondere im wesentlichen sphärische Partikel, sind.

Als Füllstofffraktion (a) geeignet hat sich insbesondere ein Füllstoff erwiesen, bei dem die Korngrößenverteilung so gewählt ist, daß mehr als 95 Gew. % der Fraktion eine Korngröße < 120 µm und weiter bevorzugt mehr als 50 Gew. % eine Korngröße < 50 µm aufweisen.

Auch wenn der Füllstoffgehalt der Kunststofformteile eher an der unteren Grenze des Gesamtfüllstoffgehaltes gehalten ist, empfiehlt es sich, den Gesamtfüllstoffgehalt in der Oberflächenrandschicht auf mehr als 70 Gew. % anzureichern, weil dann ein besonders markanter Anstieg der Kratzfestigkeit der Oberfläche beobachtet wird.

Der Anteil der Füllstofffraktion (b) am Gesamtfüllstoffgehalt der Oberflächenrandschicht beträgt vorzugsweise 30 Gew. % oder mehr. Weiter bevorzugt ist ein Anteil der Füllstofffraktion (b) am Gesamtfüllstoffgehalt der Oberflächenrandschicht von 50 Gew. % oder mehr.

Andererseits kann es je nach Einsatzzweck der Formteile von Vorteil sein, wenn in von der Oberflächenrandschicht entfernten Schichten des Formteils im wesentlichen keine Anteile der Füllstofffraktion (b) vorhanden sind. D.h. in diesen Bereichen des Kunststofformteils liegt die Füllstofffraktion (a) im wesentlichen alleine als Füllstoff vor und verleiht diesen Teilen des Kunststofformteils die vorteilhaften Eigenschaften, wie dies bereits von Kunststofformteilen aus den Massen entsprechend dem Stand der Technik her bekannt ist.

Unter der Oberflächenrandschicht wird eine Schicht, die die Nutzseite der Kunststofformteile darstellt, verstanden, welche, gemessen von der Oberfläche, ca. 3 mm, bevorzugt 2 mm, dick ist. Vorzugsweise findet man das Maximum der Füllstoffverteilung im Kunststofformteil bei ca. 1 mm Abstand von der Formteiloberfläche. Wird im Füllstoff der Fraktion (b) eine Korngröße deutlich über 1000 µm verwendet, so ist die Dicke der Oberflächenrandschicht auf das 1,5- bis 2fache des gröbsten Korns der Fraktion (b) festzulegen.

Die zuvor erwähnte, mit Füllstoffpartikeln der Fraktion (b) im wesentlichen ungefüllte äußerste Oberflächenschicht beträgt normalerweise nur wenige µm, d.h. normalerweise 1-50 Am, vorzugsweise 10-25 µm.

Bevorzugte Gewichtsverhältnisse der Anteile der Füllstofffraktion (a) zum Anteil der Füllstofffraktion (b) betragen von ca. 95:5 bis ca. 65:35.

Die Füllstoffpartikel werden bevorzugt in silanisierter Form eingesetzt. Dies erleichtert und verbessert die Anbindung der Füllstoffpartikel an die umgebende Kunststoffmatrix.

Die Kunststoffmatrix selbst kann aus einer Vielzahl von gängigen Polymerwerkstoffen gebildet sein, z.B. Polyester, Acrylatpolymere oder Epoxidpolymere, wobei Acrylatpolymere und Epoxidpolymere bevorzugt sind. Unter Acrylatpolymeren werden Polymere auf der Basis der Derivate der Acrylsäure verstanden, einschließlich von alkylsubstituierten Acrylsäurederivaten, insbesondere deren Ester.

Bei der Herstellung der erfindungsgemäßen Kunststofformteile, welche bevorzugt im Gießverfahren vorgenommen wird, ist zu beachten, daß die Viskosität der Formmasse so abgestimmt ist, daß eine Sedimentation der Füllstofffraktion (b), welche zunächst in der Formmasse im wesentlichen homogen verteilt vorliegt, während dem Aushärteprozeß und der Bildung der Polymermatrix in ausreichendem Maße stattfinden kann. Dies kann beispielsweise über die Menge an zugegebenem Präpolymer einfach eingestellt werden.

Werden z.B. Acrylatpolymere verwendet, hat es sich als günstig erwiesen, ein Präpolymer mit einer normalen Molmasse von ca. 50.000 bis 250.000 mit einem Anteil von ca. 10-30 Gew. %, vorzugsweise 15 bis 23 Gew. %, jeweils bezogen auf den Gesamtpolymeranteil des Formteils, einzusetzen, so daß je nach Korngröße der Fraktion (b) der gewünschte Absetz- und Anreicherungseffekt eintritt. Das entspricht Sirupviskositäten von ca. 30 - 2.000 mPa·s, vorzugsweise 60 - 300 mPa·s. Die Viskositätsangaben gelten, wo nichts anderes vermerkt ist, für eine Temperatur von 20° C.

Von Bedeutung bei der Einstellung der Viskosität ist ferner die Kornform und -größe der beiden Füllstofffraktionen aus anorganischem Füllstoff.

Insbesondere bei Verwendung von hohen Pigmentanteilen in der Gießmasse kann es vorkommen, daß die Viskosität der Masse so stark erhöht wird, daß ein ausreichendes Absetzen in der für die Produktion der Formteile wünschenswerten Taktzeit nicht immer gewährleistet ist.

Mit Erfolg lassen sich hier mit Pigmenten beschichtete Partikel der Füllstofffraktion (b) einsetzen. In der Masse selbst kann man dann weitgehend oder vollständig auf Pigmente verzichten. Durch den erfindungsgemäßen Anreicherungseffekt in der Oberflächenrandschicht erhält man überdies bei den pigmentbeschichteten Füllstoffpartikeln eine Konzentration der Pigmente in der Oberflächenrandschicht, d.h. auf der Sichtseite des Formteils und benötigt dadurch für die Erzielung desselben tiefen Farbeindruckes bedeutend weniger Pigmentstoffe. Die Absetzcharakteristik der pigmentbeschichteten Füllstoffe ist dabei gegenüber den unbeschichteten nicht schlechter, da ja in diesem Fall auf "freies" Pigment in der Masse verzichtet werden kann.

Nachdem bislang im Stand der Technik für gefüllte Polymerwerkstoffe immer dem Problem der Entmischung bzw. der Sedimentation mindestens von Teilen der Füllstoffe entgegengewirkt wurde, um zu guten Produkteigenschaften zu kommen, ergibt sich bei vorliegender Erfindung erstaunlicherweise der Effekt, daß sich bei einer teilweisen Entmischung bzw. einer teilweise inhomogenen Verteilung der Füllstoffe in der Kunststoffmatrix ganz besondere Vorteile für die Kratzfestigkeit der Oberfläche der Kunststofformteile ergeben.

Die Kratzfestigkeit wird im vorliegenden Zusammenhang entsprechend folgendem Prüfverfahren definiert und verstanden:
Mit einem "hardness and adhesion tester" (Modell 413 der Firma Erich Senn, Hemer, Deutschland) wurden mit Hilfe einer Diamantnadel mit 90°-Kegel Kratzer mit aufsteigenden Belastungen von 1 bis 10 Newton in einer Probe einer Formteiloberfläche erzeugt. Die Tiefe dieser Kratzer wurde mit einem Rauhtiefenmeßgerät (Modell T 2000 mit Linearvorschubeinheit LV 50 der Firma Hommel-Werke, Villingen-Schwenningen, Deutschland) ausgemessen und gegen die Belastung aufgetragen. Die erfindungsgemäßen Formteile mit der ungleichen Verteilung der Füllstofffraktion (b) weisen eine wesentlich geringere Tiefe der erzielbaren Kratzer auf als bei den gemäß den unten beschriebenen Vergleichsbeispielen erhaltenen Formteilen.

Diese und weitere Vorteile der Erfindung werden im folgenden anhand der Beispiele und Vergleichsbeispiele noch näher erläutert.

### Beispiele:

### Vergleichsbeispiel 1:

1,8 kg PMMA einer normalen Type im Molekulargewichtsbereich von 50.000-250.000 wird in 8,2 kg MMA gelöst und mit Entformungshilfsmittel und Vernetzer versetzt. Dann wird mit 17 kg Cristobalit- und Quarzmehl (in diesem Fall Cristobalitmehl mit Partikeln < 150 um silanisiert in der Korngrößenverteilung 5 Gew. % ≥ 100 µm, 42 Gew. % ≥ 32 µm) auf einen Füllstoffgehalt von 63 Gew. % eingestellt. Nach Zusatz von Peroxiden wird in geeigneten typischen Küchenspülen-Formen polymerisiert. Von einer Probe des Beckenbodens der Küchenspüle wurde die Kratzfestigkeit nach obiger Vorschrift bestimmt:

| | | | | | | | | |
|---|---|---|---|---|---|---|---|---|
| Belastung (N) | 10 | 9 | 8 | 7 | 6 | 5 | 4 | 3 |
| Tiefe (µm) | 16 | 15 | 13 | 12 | 8 | 4 | 2 | 2 |

Der Füllstoff mit einem Gewichtsanteil von 63 % ist über die Spülendicke weitgehend gleichmäßig verteilt.

### Beispiel 1

1,8 kg PMMA einer normalen Type im Molekulargewichtsbereich von 50.000-250.000 wird in 8,0 kg MMA gelöst und mit Entformungshilfsmittel und 0,2 kg Vernetzer versetzt. Dann wird 15,3 kg Cristobalit- oder Quarzmehl (in diesem Fall Cristobalitmehl in der im Vergleichsbeispiel 1 angegebenen Korngrößenverteilung) als Füllstofffraktion (a) zugegeben. Zusätzlich wird mit einem runden oder splittrigen Sand bzw. mit runden groben Glaskugeln (in diesem Fall beschichteter runder Quarzsand, Type 1/8 SIG silanisiert der Firma Dorfner in Amberg/Deutschland, 1,7 kg in der Korngrößenverteilung mindestens 95 Gew. % > 300 µm, maximal 15 Gew. % > 700 um) als Füllstofffraktion (b) ein Gesamtfüllstoffgehalt von 63 Gew. % eingestellt. Nach Zusatz von Peroxiden wird in geeigneten Formen polymerisiert. Die im Beckenboden des Formteils erzeugten Kratzer werden bezüglich der Tiefe vermessen:

| | | | | | | | | |
|---|---|---|---|---|---|---|---|---|
| Belastung (N) | 10 | 9 | 8 | 7 | 6 | 5 | 4 | 3 |
| Tiefe (µm) | 10 | 9 | 7 | 6 | 5 | - | - | - |
| - = nicht meßbar | | | | | | | | |

Der Gesamtfüllstoffanteil ist nicht gleichmäßig verteilt. Um dies festzustellen, wird die Probe des Beckenbodens (der hier als am stärksten kratzbelastete Bereich gilt) parallel zur Oberfläche in Scheiben von 1 mm Dicke geschnitten, so daß über die Spülendicke der Füllstoffanteil (fein und grob) und über eine Siebung auch das eingetretene Verhältnis von feinem und grobem Füllstoff bestimmt werden kann.

Folgendes Ergebnis ist festzustellen:

| Dickenbereich | Füllstoffanteil gesamt (Gew. %) | Grobanteil am Füllstoffanteil* (Gew. %) |
|---|---|---|
| 0-1 mm | 82,6 | 62,1 |
| 2-3 mm | 65,4 | 11,1 |
| 4-5 mm | 60,6 | 1,1 |
| 6-7 mm | 60,4 | 0,8 |
| 8-9 mm | 61,2 | 1,1 |
| 9-10 mm | 55,8 | 1,1 |

| | | |
|---|---|---|
| * Als Grobanteil am Füllstoffanteil wird der Anteil des Gesamtfüllstoffes verstanden, der bei der Siebung auf 300 µm im Rückstand verbleibt. | | |

Offensichtlich konnte nahezu der gesamte Grobanteil in der Schicht des ersten mm angereichert werden, so daß hier neben dem extrem hohen Füllstoffanteil von 83 Gew. % auffällig ist, daß der Grobanteil am Füllstoffanteil über 60 Gew. % beträgt. Bezogen auf die Gesamtrezeptur ist der Füllstoffanteil nur 63 Gew. % und der Grobanteil am Füllstoffanteil nur 10 Gew. %.

### Beispiel 2

1,8 kg PMMA einer normalen Type im Molekulargewichtsbereich von 50.000-250.000 wird in 8,0 kg MMA gelöst und mit Entformungshilfsmittel und 0,2 kg Vernetzer versetzt. Dann wird 17,4 kg Cristobalit- oder Quarzmehl wie in Vergleichsbeispiel 1 zugegeben. Zusätzlich wird mit einem runden oder splittrigen Sand bzw. mit runden groben Glaskugeln (in diesem Fall beschichteter runder Quarzsand wie in Beispiel 1, 0,73 kg) ein Gesamtfüllstoffgehalt von 64 Gew. % eingestellt. Nach Zusatz von Peroxiden wird in geeigneten Formen polymerisiert. Die Tiefe der erzeugten Kratzer wird mit dem Rauhtiefenmeßgerät vermessen:

| | | | | | | | | |
|---|---|---|---|---|---|---|---|---|
| Belastung (N) | 10 | 9 | 8 | 7 | 6 | 5 | 4 | 3 |
| Tiefe (µm) | 10 | 6 | 8 | 6 | - | - | - | - |
| - = nicht meßbar | | | | | | | | |

Bei der Ermittlung der Füllstoffanteile über die Spülendicke ist folgendes Ergebnis ist festzustellen:

| Dickenbereich | Füllstoffanteil gesamt (Gew. %) | Grobanteil am Füllstoffanteil* (Gew. %) |
|---|---|---|
| 0-1 mm | 77,2 | 50,9 |
| 2-3 mm | 62,6 | 6,5 |
| 4-5 mm | 62,5 | 1,2 |
| 6-7 mm | 60,3 | 0,9 |
| 8-9 mm | 60,4 | 1,1 |
| 9-10 mm | 57,2 | 1,3 |

| | | |
|---|---|---|
| *Als Grobanteil am Füllstoffanteil wird der Anteil des Gesamtfüllstoffes verstanden, der bei der Siebung auf 300 µm im Rückstand verbleibt. | | |

Offensichtlich konnte wieder nahezu der gesamte Grobanteil in der Schicht des ersten mm angereichert werden, so daß hier neben dem sehr hohen Füllstoffanteil von 77 Gew. % auffällig ist, daß der Grobanteil am Füllstoffanteil 50 Gew. % beträgt. Bezogen auf die Gesamtrezeptur ist der Gesamtfüllstoffanteil nur 64 Gew. % und der Grobanteil am Füllstoffanteil nur 4 % Gew.

### Beispiel 3

1,8 kg PMMA einer normalen Type im Molekulargewichtsbereich von 50.000-250.000 wird in 8,2 kg MMA gelöst und mit Entformungshilfsmittel und Vernetzer versetzt. Dann wird 13,6 kg Cristobalit- oder Quarzmehl wie in Vergleichsbeispiel 1 zugegeben. Zusätzlich wird mit einem runden oder splittrigen Sand bzw. mit runden groben Glaskugeln (in diesem Fall beschichteter runder Quarzsand wie in Beispiel 1, 3,4 kg) ein Gesamtfüllstoffgehalt von 63 Gew. % eingestellt. Nach Zusatz von Peroxiden wird in geeigneten Formen polymerisiert. Die Kratzfestigkeitswerte sind im folgenden angegeben:

| | | | | | | | | |
|---|---|---|---|---|---|---|---|---|
| Belastung (N) | 10 | 9 | 8 | 7 | 6 | 5 | 4 | 3 |
| Tiefe (µm) | 10 | 8 | 7 | 5 | 2 | - | - | - |
| - = nicht meßbar | | | | | | | | |

Bei der Ermittlung der Füllstoffanteile über die Spülendicke ist folgendes Ergebnis festzustellen:

| Dickenbereich | Füllstoffanteil gesamt (Gew. %) | Grobanteil am Füllstoffanteil* (Gew. %) |
|---|---|---|
| 0-1 mm | 77,7 | 60,7 |
| 2-3 mm | 67,6 | 35,5 |
| 4-5 mm | 62,7 | 20,8 |
| 6-7 mm | 52,0 | 6,1 |
| 8-9 mm | 57,3 | 1,3 |
| 9-10 mm | 56,0 | 1,2 |

| | | |
|---|---|---|
| *Als Grobanteil am Füllstoffanteil wird der Anteil des Gesamtfüllstoffes verstanden, der bei der Siebung auf 300 µm im Rückstand verbleibt. | | |

Offensichtlich konnte der Grobanteil verstärkt in der oberen Hälfte der Spüle angereichert werden, so daß hier neben dem sehr hohen Füllstoffanteil von 77 Gew. % auffällig ist, daß der Grobanteil am Füllstoffanteil 60 Gew. % beträgt. Bezogen auf die Gesamtrezeptur ist der Füllstoffanteil nur 63 Gew. % und der Grobanteil am Füllstoffanteil nur 31 Gew. %.

### Vergleichsbeispiel 2

1,8 kg PMMA einer normalen Type im Molekulargewichtsbereich von 50.000-250.000 wird in 8,0 kg MMA gelöst und mit Entformungshilfsmittel und 0,2 kg Vernetzer versetzt. Dann wird 27,1 kg Cristobalit- oder Quarzmehl wie in Vergleichsbeispiel 1 als Fraktion (a) zugegeben. Zusätzlich wird mit einem runden oder splittrigen Sand bzw. mit runden groben Glaskugeln als Fraktion (b) (in diesem Fall beschichteter runder Quarzsand wie in Beispiel 1, 5,2 kg) ein Gesamtfüllstoffgehalt von 76 Gew. % eingestellt. Nach Zusatz von Peroxiden wird in geeigneten Formen polymerisiert. Die Tiefe der im Beckenboden des Formteils erzeugten Kratzer wird mit einem Rautiefenmeßgerät bestimmt:

| | | | | | | | | |
|---|---|---|---|---|---|---|---|---|
| Belastung (N) | 10 | 9 | 8 | 7 | 6 | 5 | 4 | 3 |
| Tiefe (µm) | 14 | 8 | 9 | 7 | 6 | 5 | 3 | 2 |

Offensichtlich ist die Kratzfestigkeit hier gegenüber dem Vergleichsbeispiel 1 nicht mehr deutlich besser, insbesondere sind die Werte schlechter als bei Beispielrezepturen mit geringerem Anteil an grobem Füllstoff.

Bei der Ermittlung der Füllstoffanteile über die Spülendicke ist folgendes Ergebnis festzustellen:

| Dickenbereich | Füllstoffanteil gesamt (Gew. %) | Grobanteil am Füllstoffanteil* (Gew. %) |
|---|---|---|
| 0-1 mm | 76,3 | 13,8 |
| 2-3 mm | 76,0 | 10,7 |
| 4-5 mm | 76,2 | 11,6 |
| 6-7 mm | 73,1 | 11,0 |

| | | |
|---|---|---|
| *Als Grobanteil am Füllstoffanteil wird der Anteil des Gesamt füllstoffes verstanden, der bei der Siebung auf 300 µm im Rück stand verbleibt. | | |

Offensichtlich konnte hier betreffend die Füllstofffraktion (b) ein Absetzverhalten vermieden werden. Der sehr hohe Füllstoffanteil von 76 Gew. % ist hier über die gesamte Spülendicke gleichmäßig verteilt, auch der Grobanteil ist abgesehen von einer geringfügigen Anreicherung an der Rückseite gleichmäßig verteilt. Rechnerisch erhält man, daß an der kratzbelasteten Sichtseite der Grobanteil lediglich ca. 14 Gewichtsprozent, bezogen auf den Füllstoffanteil, bzw. ca. 10 Gew. %, bezogen auf die Gesamtmasse, beträgt. Die Anteile an der Sichtseite entsprechen weitgehend denen der gesamten Spülendicke. Durch das mangelnde selektive Absinken kann keine ausreichend verbesserte Kratzfestigkeit erzielt werden.

### Beispiele 4 und 5

Bei einer Gießmasse mit der Zusammensetzung von Beispiel 1 wurde bei gleicher Auswahl der Komponenten der Anteil der Füllstofffraktion (b) am Gesamtfüllstoffgehalt einmal auf 1 Gew. % (Beispiel 4) und einmal auf 35 Gew. % (Beispiel 5) eingestellt. Die Polymerisierung der Masse in einer Form wurde entsprechend dem Vergleichsbeispiel 1 durchgeführt, ebenso der nachfolgende Kratzfestigkeitstest. Folgende Werte wurden gefunden:

### Beispiel 4:

| | | | | | | |
|---|---|---|---|---|---|---|
| Belastung (N) | 10 | 9 | 8 | 7 | 6 | 5 |
| Tiefe (µm) | 15 | 12 | 11 | 9 | 8 | 5 |

Beispiel 5: die Tiefe der Kratzer war bei jeder Auflagekraft bis einschließlich 10 N zu gering, um gemessen zu werden.

## Patentansprüche

1. Kunststofformteil mit einer mit anorganischen Füllstoffen gefüllten Kunststoffmatrix, wobei der Füllstoffgehalt 50 bis 90 Gew. %, bezogen auf die gefüllte Matrix, beträgt, dadurch gekennzeichnet, daß der Füllstoffgehalt von zwei Füllstofffraktionen (a) und (b) gebildet wird, wobei die Füllstofffraktion (a) eine Korngrößenverteilung aufweist, bei der 98 Gew. % der Partikel eine Korngröße < 150 µm aufweisen, und im wesentlichen gleichmäßig in der Kunststoffmatrix verteilt ist und wobei die Füllstofffraktion (b) aus Partikeln mit einer Partikelgröße von ca. 300 bis 3000 µm besteht, daß der Anteil der Füllstofffraktion (b) ca. 1 bis 35 Gew. % am Gesamtfüllstoffgehalt beträgt und daß der Anteil der Füllstofffraktion (b) in einer Oberflächenrandschicht des Formteils mit einer Dicke von 3 mm oder weniger auf mindestens 30 Gew. %, bezogen auf die Gesamtmasse der gefüllten Matrix, angereichert ist.

2. Kunststofformteil nach Anspruch 1, dadurch gekennzeichnet, daß die Füllstoffpartikel der Füllstofffraktion (b) im wesentlichen granulare Partikel sind.

3. Kunststofformteil nach Anspruch 1 oder 2, dadurch gekennzeichnet, daß mehr als 50 Gew. % der Füllstofffraktion (a) eine Korngröße < 50 µm aufweisen.

4. Kunststofformteil nach einem der Ansprüche 1 bis 3, dadurch gekennzeichnet, daß der Gesamtfüllstoffgehalt in der Oberflächenrandschicht mindestens teilweise mehr als 70 Gew. % beträgt.

5. Kunststofformteil nach Anspruch 1 bis 4, dadurch gekennzeichnet, daß der Anteil der Füllstofffraktion (b) am Gesamtfüllstoffgehalt der Oberflächenrandschicht 30 Gew. % oder mehr beträgt.

6. Kunststofformteil nach Anspruch 5, dadurch gekennzeichnet, daß der Anteil der Füllstofffraktion (b) am Gesamtfüllstoffgehalt der Oberflächenrandschicht 50 Gew. % oder mehr beträgt.

7. Kunststofformteil nach einem der Ansprüche 1 bis 6, dadurch gekennzeichnet, daß in von der Oberflächenrandschicht entfernten Schichten im wesentlichen keine Anteile der Füllstofffraktion (b) vorhanden sind.

8. Kunststofformteil nach einem der Ansprüche 1 bis 7, dadurch gekennzeichnet, daß das Gewichtsverhältnis des Anteils der Füllstofffraktion (a) zum Anteil der Füllstoff-fraktion (b) von 95:5 bis 65:35 beträgt.

9. Kunststofformteil nach einem der Ansprüche 1 bis 8, dadurch gekennzeichnet, daß die Füllstoffpartikel silanisiert sind.

10. Kunststofformteil nach einem der Ansprüche 1 bis 9, dadurch gekennzeichnet, daß die Partikel der Füllstoff-fraktion (b) mit einer Pigmente enthaltenden Masse beschichtet sind.

11. Kunststofformteil nach einem der Ansprüche 1 bis 10, dadurch gekennzeichnet, daß die Kunststoffmatrix aus einem Acrylpolymer gebildet ist.

12. Kunststofformteil nach einem der Ansprüche 1 bis 10, dadurch gekennzeichnet, daß die Kunststoffmatrix aus einem Epoxidpolymer gebildet ist.

13. Kunststofformteil nach Anspruch 11, dadurch gekennzeichnet, daß die Kunststoffmatrix aus einem Präpolymersirup in Form einer Lösung von 8-30 Gew. % PMMA mit einer normalen Molmasse von 50.000 bis 250.000 in MMA gebildet wird.

14. Kunststofformteil nach Anspruch 13, dadurch gekennzeichnet, daß der Präpolymersirup 15-23 Gew. % des PMMA enthält.

15. Kunststofformteil nach einem der voranstehenden Ansprüche, dadurch gekennzeichnet, daß die Kunststoffmatrix aus einer härtbaren Masse aus einem oder mehreren Monomeren und gegebenenfalls Präpolymeranteilen gebildet ist, wobei die Viskosität der härtbaren Masse bei einer Temperatur von 20° C auf ca. 30 - 2.000 mPa·s, vorzugsweise 60 - 300 mPa·s, eingestellt ist.

## Claims

1. Plastic moulded article comprising a polymer matrix filled with inorganic fillers, wherein the filler content is 50 to 90 % by weight in relation to the filled matrix, characterized in that the filler content is formed by two filler fractions (a) and (b),
wherein the filler fraction (a) has a particle size distribution with 98 % by weight of the particles having a particle size ≤ 150 µm and is distributed essentially uniformly in the polymer matrix, and wherein the filler fraction (b) consists of particles having a particle size of approximately 300 to 3000 µm, in that the proportion of the filler fraction (b) is approximately 1 to 35 % by weight of the total filler content, and in that the proportion of the filler fraction (b) in an outer surface layer of the moulded article with a thickness of 3 mm or less is enriched to at least 30 % by weight in relation to the total mass of the filled matrix.

2. Plastic moulded article as defined in claim 1, characterized in that the filler particles of the filler fraction (b) are essentially granular particles.

3. Plastic moulded article as defined in claim 1 or 2, characterized in that more than 50 % by weight of the filler fraction (a) has a particle size < 50 µm.

4. Plastic moulded article as defined in any one of claims 1 to 3, characterized in that the total filler content in the outer surface layer is at least partially more than 70 % by weight.

5. Plastic moulded article as defined in claims 1 to 4, characterized in that the proportion of the filler fraction (b) in the total filler content of the outer surface layer is 30 % by weight or more.

6. Plastic moulded article as defined in claim 5, characterized in that the proportion of the filler fraction (b) in the total filler content of the outer surface layer is 50 % by weight or more.

7. Plastic moulded article as defined in any one of claims 1 to 6, characterized in that essentially no portions of the filler fraction (b) are present in layers remote from the outer surface layer.

8. Plastic moulded article as defined in any one of claims 1 to 7, characterized in that the weight ratio of the proportion of the filler fraction (a) to the proportion of the filler fraction (b) is from 95:5 to 65:35.

9. Plastic moulded article as defined in any one of claims 1 to 8, characterized in that the filler particles are silanized.

10. Plastic moulded article as defined in any one of claims 1 to 9, characterized in that the particles of the filler fraction (b) are coated with a composition containing pigments.

11. Plastic moulded article as defined in any one of claims 1 to 10, characterized in that the polymer matrix is formed from an acrylic polymer.

12. Plastic moulded article as defined in any one of claims 1 to 10, characterized in that the polymer matrix is formed from an epoxide polymer.

13. Plastic moulded article as defined in claim 11, characterized in that the polymer matrix is formed from a prepolymer syrup in the form of a solution of 8-30 % by weight of PMMA having a normal relative molar mass of 50,000 to 250,000 in MMA.

14. Plastic moulded article as defined in claim 13, characterized in that the prepolymer syrup contains 15-23 % by weight of the PMMA.

15. Plastic moulded article as defined in any one of the preceding claims, characterized in that the polymer matrix is formed from a curable composition consisting of one or several monomers and, optionally, prepolymer proportions, the viscosity of the curable composition being set at a temperature of 20°C to approximately 30 - 2,000 mPa·s, preferably 60 - 300 mPa·s.

## Revendications

1. Pièce moulée en matière plastique avec une matrice en matière plastique remplie avec des charges inorganiques, dans laquelle le taux de charge s'élève à entre 50 et 90% en poids, par rapport à la matrice chargée, caractérisée en ce que, la concentration des charges est constituée de deux fractions de charges (a) et (b), la fraction de charges (a) présentant une distribution des tailles de grains dans laquelle 98% en poids des particules présentent une taille de grains ≤ 150 µm, et elles sont réparties essentiellement uniformément dans la matrice de matière plastique et dans laquelle la fraction de charges (b) est constituée de particules ayant une taille de particules d'environ 300 à 3000 um, en ce que la proportion de la fraction de charges (b) s'élève à environ entre 1 et 35% en poids du contenu total de charges et en ce que la proportion de la fraction de charges (b) est enrichie dans une couche au bord de la surface de la pièce moulée avec une épaisseur de 3 mm ou moins à au moins 30% en poids, par rapport la masse totale de la matrice chargée.

2. Pièce moulée en matière plastique selon la revendication 1, caractérisée en ce que les particules de charge de la fraction de charge (b) sont essentiellement des particules granulaires.

3. Pièce moulée en matière plastique selon la revendication 1 ou 2, caractérisée en ce que plus de 50% en poids de la fraction de charges (a) présente une taille de grains < 50 µm.

4. Pièce moulée en matière plastique selon l'une des revendications 1 à 3, caractérisée en ce que la concentration de charge totale dans la couche au bord de la surface s'élève au moins partiellement à plus de 70% en poids.

5. Pièce moulée en matière plastique selon les revendications 1 à 4, caractérisée en ce que la proportion de la fraction de charges (b) s'élève à 30% en poids ou plus du contenu total de charges de la couche au bord de la surface.

6. Pièce moulée en matière plastique selon la revendication 5, caractérisée en ce que la proportion de la fraction de charges (b) s'élève à 50% en poids ou plus du contenu total de charges de la couche au bord de la surface.

7. Pièce moulée en matière plastique selon l'une des revendications 1 à 6, caractérisée en ce qu'essentiellement aucune partie de la fraction de charges (b) n'est présente dans des couches éloignées de la couche du bord de la surface.

8. Pièce moulée en matière plastique selon l'une des revendications 1 à 7, caractérisée en ce que le rapport en poids de la proportion de la fraction de charges (a) sur la proportion de la fraction de charges (b) s'élève à entre 95 : 5 et 65 : 35.

9. Pièce moulée en matière plastique selon l'une des revendications 1 à 8, caractérisée en ce que les particules de charges sont silanisées.

10. Pièce moulée en matière plastique selon l'une des revendications 1 à 9, caractérisée en ce que les particules de la fraction de charges (b) sont revêtues avec une matière contenant des pigments.

11. Pièce moulée en matière plastique selon l'une des revendications 1 à 10, caractérisée en ce que la matrice de matière plastique est formée d'un polymère acrylique.

12. Pièce moulée en matière plastique selon l'une des revendications 1 à 10, caractérisée en ce que la matrice de matière plastique est formée d'un polymère époxyde.

13. Pièce moulée en matière plastique selon la revendication 11, caractérisée en ce que la matrice de matière plastique est formée d'un sirop de prépolymère sous la forme d'une solution de 8-30% en poids PMMA avec une masse molaire normale de 50000 à 250000 en MMA.

14. Pièce moulée en matière plastique selon la revendication 13, caractérisée en ce que le sirop de prépolymère contient 15-23% en poids du PMMA.

15. Pièce moulée en matière plastique selon l'une des revendications précédentes, caractérisée en ce que, la matrice de matière plastique est formée d'une matière durcissable constituée d'un ou de plusieurs monomères et éventuellement en partie de prépolymères, la viscosité de la matière durcissable étant ajustée à une température de 20°C à environ 30-2000 mPa·s, de préférence à 60-300 mPa·s.
